# EUROPÄISCHE PATENTANMELDUNG

(11) **EP 0 952 409 A2**
(43) Veröffentlichungstag der Anmeldung: **27.10.1999**
(21) Anmeldenummer: 99106309.0
(22) Anmeldetag: 26.03.1999
(51) Int. Cl.: F24F 12/00

(54) **Gegenstrom-Plattenwärmeübertrager**

(30) Priorität: 17.04.1998 DE 29806908 U
(71) Anmelder: Happel, Karl-Heinz, 01129 Dresden (DE)
(72) Erfinder: Happel, Karl-Heinz, 01129 Dresden (DE)
(74) Vertreter: Ilberg, Roland W., Dipl.-Ing.

(57) **Zusammenfassung**

Bei einem Gegenstrom-Plattenwärmeübertrager zur Wärme- und/oder Kälterückgewinnung in lufttechnischen Anlagen, bestehend aus einer Hüllkonstruktion (1) und einem Funktionsteil (4), das von der Hüllkonstruktion (1) umschlossen ist und das ein Plattenwärmetauscherpaket enthält, werden erfindungsgemäß alle Luftein- und Luftauslässe des Funktionsteils (4) auf einer Seite angeordnet und die Luftströme (AL -> FL; AUL -> ZL) auf der entgegengesetzten Seite des Funktionsteils (4) um 180° umgelenkt.

## Beschreibung

Die Erfindung bezieht sich auf einen Gegenstrom-Plattenwärmeübertrager zur Wärme- und/oder Kälterückgewinnung in lufttechnischen Anlagen, bestehend aus einer Hüllkonstruktion und einem Funktionsteil, das von der Hüllkonstruktion umschlossen ist und ein Plattenwärmetauscherpaket enthält.

Plattenwärmeübertrager haben den großen Vorzug gegenüber beispielsweise regenerativen Wärmeübertragern, wie Wärmeräder, daß während ihres Betriebes weder Feuchtigkeit noch Leckluft oder Bakterien usw. in die zu klimatisierenden Räume verschleppt werden, da die zu tauschenden Wärmeströme durch jeweils zwei Patten eines Plattenpaketes getrennt sind und die Wärmeübertragung allein rekuperativ über die PLattenfläche erfolgt. Sie sind deshalb z.B. für Krankenhäuser vorgeschrieben, obwohl ihr Wirkungsgrad nicht an regenerative Wärmeübertrager heranreicht.

Einen besonders einfachen Aufbau mit guten Voraussetzungen zum getrennten Einleiten und Herausführen der Luftströme aus unzähligen Einzelplatten besitzt der Kreuzstromplattenwärmeübertrager, in dem sich die wärmetauschenden Luftströme kreuzen, was allerdings energetisch mit einem nur mittleren Wirkungsgrad verbunden ist.

Vom Wirkungsgrad optimal hingegen sind Gegenstrom-Plattenwärmeübertrager, weil z.B. die kälteste Luft, die zu wärmende Außenluft, der wärmsten Luft, der wärmespendenden Fortluft, genau entgegengesetzt wird, mithin ein hoher Temperaturgradient besteht und außerdem der Wärmetauscherweg wesentlich länger ist als bei einem Kreuzstromwärmeübertrager. Bisher gibt es aber noch keine befriedigenden technischen Lösungen für Kompaktgeräte, die nach diesem Prinzip arbeiten.

Der Erfindung liegt deshalb die Aufgabe zugrunde, einen Gegenstrom-Plattenwärmeübertrager in Kompaktbauweise zu entwickeln, der z.B. in eine Klimazentraleinheit Problemlos einzubauen ist.

Die Aufgabe wird erfindungsgemäß durch die im Anspruch 1 angegebenen Merkmale gelöst. Weitere vorteilhafte Ausgestaltungen der Erfindung sind in den begleitenden Unteransprüchen angegeben.

Im erfindungsgemäßen Kompaktgerät wird die Abluft eines Raumes der angesaugten Außenluft in einem Plattenwärmetauscherpaket im Luftstrom entgegengeführt. Die Wärmeübertragung der gegenläufigen Luftströme erfolgt rekuperativ ohne Luft- und Massekontakt zwischen der Ab- und Außenluft. Zur Verbesserung des Wärmetauschs sind die wärmeübertragenden Trennwandflächen oberflächenvergrößernd profiliert. Zur Steigerung der Turbulenzen und damit Verbesserung der Wärmeübergänge αᵢ und αₐ an den Grenzflächen sind zwei wirbelbildende Umlenkungen in die Oberflächen der verformten Trennwände integriert.

Mit Hilfe oberflächenvergrößernder und turbulenzbildender Strukturen der Trennwände des Plattenwärmeübertragungspaketes wird eine bisher unerreichte, in übliche Kastengeräte der Klimaindustrie einbaubare, kompakte Geräteausführung möglich.

Das Material des Wärmetauschers ist Kunststoff oder ein gleichwertig formbares Material. Die Herstellung erfolgt in einem speziellen Tiefziehverfahren. Zur Optimierung der Temperatur in der Übergangszeit und zur Organisation einer Abtauschaltung ist das Kompaktgerät im Wärmetauscherblock vorzugsweise mit Bypass-Einrichtungen ausgestattet. Je nach Dimensionierung sind die mit dem Kompaktgerät Wärmeübertragungsgrade von 80% und mehr zu erreichen. Ein bevorzugter Einsatzfall liegt beispielsweise im Austausch eines Rotorwärmetauschers für ein Verfahren zur Kühlung der Luft unter optimaler Rückgewinnung von Kälte aus adiabat gekühlter Abluft nach der DE 195 08 183 A1.

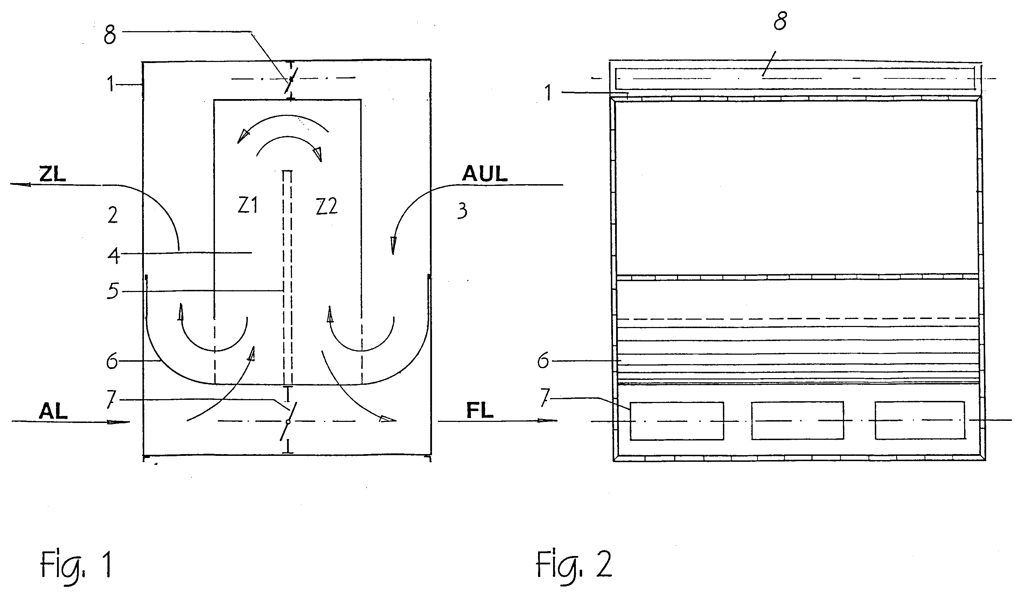

Die Erfindung soll anhand eines Ausführungsbeispiels näher beschrieben werden. In der zugehörigen Zeichnung zeigen
Fig. 1: Ein schematisiertes Kompaktgerät im Schnitt und
Fig. 2: eine Ansicht quer zum Schnitt nach Fig. 1.

Eine kompakte, kastenförmige Hüllkonstruktion 1 ist auf beiden entgegengesetzten Seitenflächen 2, 3 in je zwei Öffnungen unterteilt, an die sich nicht näher dargestellte Luftleiteinrichtungen, wie beispielsweise Kanäle oder Kastengeräte anschließen. Durch die eine, obere Öffnung wird die Außenluft (AUL) zugeführt und in noch näher zu beschreibender Weise durch die andere, obere Öffnung als Zuluft (ZL) einem zu klimatisierenden Raum zugeführt.

Durch die eine, untere Öffnung und zwar diejenige, die auf der Zuluftseite liegt, wird die Abluft (AL) angesaugt und nach dem Wärmetausch mit der Außenluft (AUL) auf der entgegengesetzten Seite der Hüllkonstruktion 1, also auf der Außenluftseite, durch die andere, untere Öffnung als Fortluft (FL) ins Freie abgeführt.

Innerhalb der Hüllkonstruktion 1 ist der eigentliche Funktionsteil 4 angeordnet. Er besteht aus einem kleineren, kastenförmigen Gehäuse, dessen obere Stirnwand mit der Oberseite der Hüllkonstruktion 1 oder einem Bypass abschließt. Entgegen dieser Stirnwand ist das Gehäuse des Funktionsteils 4 geöffnet, wobei die Öffnung von einer Trennwand 5 geteilt ist, die sich bis nahe der geschlossenen oberen Stirnwand des Funktionsteils 4 fortsetzt und das Funktionsteil 4 in zwei Züge Z1, Z2 aufteilt. Auf der offenen Seite des Funktionsteils 4 setzt sich die Trennwand bis zur unteren Wand der Hüllkonstruktion 1 oder über eine Drosselklappenkonstruktion 7 fort. Anstelle von Drosselklappen 7 kann selbstverständlich jede andere geeignete Luftregulierungseinrichtung eingesetzt werden.

Durch die eine untere Öffnung des Funktionsteils 4 strömt die Abluft (AL) in den ersten Zug Z1 ein. Sie wird oberhalb des Trennwandendes umgelenkt, strömt durch den zweiten Zug Z2 in entgegengesetzter Richtung zurück und als Fortluft (FL) durch die zweite untere Öffnung im Funktionsteil 4 fort.

Außerdem befindet sich auf jeder Seite des Funktionsteils 4 und zwar im Bereich des unteren, offenen Endes, jeweils noch eine Öffnung. Durch diese wird die Außenluft (AUL) im Gegenstrom zur Fortluft (FL) durch den zweiten Zug Z2 geführt, gleichfalls umgelenkt und durchströmt den ersten Zug Z1 entgegengesetzt zur Abluft (AL) und wird zur Zuluft (ZL).

Ein Luftführungsblech 6 sorgt dafür, daß Ab- und Fortluft (AL, FL) innerhalb der Hüllkonstruktion 1 getrennt von Außen- und Zuluft (AUL, ZL) strömen.

Die Strömungsquerschnitte für die Luftströme (AL, AUL, FL, ZL) untereinander sind gleichgroß und mit Ausnahme der Übergänge zu den äußeren, nicht näher dargestellten Luftleiteinrichtungen im wesentlichen über ihre Länge konstant.

Durch die erzwungenen Richtungswechsel in der Luftführung, es ergibt sich eine in etwa Ω-förmige Luftführung im Gegenstrom, werden die Luftströmungen sehr gut verwirbelt, wodurch die Wärmetauschleistung gegenüber einer laminaren Durchströmung erheblich steigt und die Vorrichtung kann als echtes Kompaktgerät ausgeführt werden und somit z.B. gegen übliche Kreuzstromwärmetauscher unmittelbar ausgetauscht werden.

Der Wärmetausch selbst erfolgt nicht direkt, sondern über nicht näher dargestellte, unzählige, feinste Kunststofflamellen, die den Funktionsteil 4 ausfüllen. Sie sind oberflächenvergrößernd profiliert, wobei die Profilierungen zugleich die Lamellen zueinander auf Abstand hält. Außerdem sind wirbelbildende Strukturen eingearbeitet.

Mittels Drosselklappen 7 in der Trennwand zwischen dem Funktionselement 4 und dem Boden der Hüllkonstruktion 1 kann die Abluft (AL) unter Umgehung des Funktionsteils 4 direkt fortgeleitet werden.

Die gleiche Anordnung einer Drosselklappe 8 zwischen dem Funktionsteil 4 und der Oberseite der Hüllkonstruktion 1 kann die Zuluft ZL unter Umgehung des Funktionsteils 4 leiten.

Durch Öffnen beider Drosselklappen 7, 8 ist die Funktion und der Strömungswiderstand des Plattenwärmetauschers ausschaltbar.

### Bezugszeichen

- Hüllkonstruktion: 1
- Seitenflächen: 2, 3
- Funktionsteil: 4
- Trennwand: 5
- Luftführungsblech: 6
- Drosselklappe AL: 7
- Drosselklappe ZL: 8
- Abluft: AL
- Außenluft: AUL
- Fortluft: FL
- Zuluft: ZL
- Zug: Z1, Z2

## Patentansprüche

1. Gegenstrom-Plattenwärmeübertrager zur Wärme- und/oder Kälterückgewinnung in lufttechnischen Anlagen, bestehend aus einer Hüllkonstruktion und einem Funktionsteil, das von der Hüllkonstruktion umschlossen ist und das Plattenwärmetauscherpaket enthält, **dadurch gekennzeichnet**, daß alle Luftein- und Luftauslässe des Funktionsteils (4) auf einer Seite angeordnet sind, und die Luftströme (AL -> FL; AUL -> ZL) auf der entgegengesetzten Seite des Funktionsteils (4) um 180° umgelenkt werden.

2. Gegenstrom-Plattenwärmeübertrager nach Anspruch 1, dadurch gekennzeichnet, daß eine Trennwand (5) den einseitig offenen Innenraum des Funktionsteils (4) in zwei gegensinnig durchströmte Züge (Z1, Z2) aufteilt, stirnseitig in den ersten Zug (Z1) einströmende Abluft (AL) auf der Gegenseite umlenkt und durch den zweiten Zug (Z2) als Fortluft (FL) stirnseitig abströmt und durch eine erste Seitenöffnung im Bereich der offenen Stirnseite Außenluft (AUL) in den zweiten Zug (Z2) im Gegenstrom zur Fortluft (FL) einströmt, umlenkt, im Gegenstrom zur Abluft (AL) den ersten Zug (Z1) durchströmt und durch eine zweite Seitenöffnung im Bereich der offenen Stirnseite als Zuluft (ZL) abströmt.

3. Gegenstrom-Plattenwärmeübertrager nach Anspruch 2, dadurch gekennzeichnet, daß auf einer Seite einer kastenförmigen Hüllkonstruktion (1) die Abluft (AL) einströmt und die Zuluft (ZL) abströmt und auf der anderen, entgegengesetzten Seite der kastenförmigen Hüllkonstruktion (1) die Fortluft (FL) abströmt und die Außenluft (AUL) einströmt.

4. Gegenstrom-Plattenwärmeübertrager nach einem der Ansprüche 1 bis 3, dadurch gekennzeichnet, daß die beiderseitigen Öffnungen für die Luftein- und Luftauslässe in der kastenförmigen Hüllkonstruktion (1) rechtwinkelig zur Luftein-/ Luftauslaßseite des Funktionsteils (4) liegen.

5. Gegenstrom-Plattenwärmeübertrager nach Anspruch 2, dadurch gekennzeichnet, daß die Abluft (AL) über einen Bypass direkt als Fortluft (FL) abströmen kann, indem mindestens eine Drosselklappe (7) in der Trennwand zwischen der offenen Stirnwand des Funktionsteils (4) und der Innenwandung der Hüllkonstruktion (1) angeordnet ist.

6. Gegenstrom-Plattenwärmeübertrager nach einem der Ansprüche 1 bis 5, gekennzeichnet durch ein Größenverhältnis von Hüllkonstruktion (1) und Funktionsteil (4) zueinander, daß die Strömungsquerschnitte für die Luftströme (AL, AUL, FL, ZL) untereinander gleichgroß und im wesentlichen über ihre Länge konstant sind.

7. Gegenstrom-Plattenwärmeübertrager nach Anspruch 1, dadurch gekennzeichnet, daß die Wärmetauscherplatten oberflächenvergrößernd und/oder wirbelbildend profiliert sind.

8. Gegenstrom-Plattenwärmeübertrager nach Anspruch 2, dadurch gekennzeichnet, daß die Trennwand (7) direkt durch eine entsprechende Ausbildung der Wärmetauscherplatten des Funktionsteils (4) gebildet ist.

9. Gegenstrom-Plattenwärmeübertrager nach einem oder mehreren der Ansprüchen 1, 7 und 8, dadurch gekennzeichnet, daß die Wärmetauscherplatten aus Kunststoff oder einem gleichartig formbaren Material hergestellt sind.

10. Gegenstrom-Plattenwärmeübertrager nach Anspruch 2, dadurch gekennzeichnet, daß die Außenluft (AUL) über einen Bypass zwischen der geschlossenen Stirnseite des Funktionsteils 4 und der Hüllkonstruktion (1) direkt als Zuluft (ZL) in die angeschlossenen Räume führbar ist, wobei im Bypass mindestens eine Drosselklappe (8) angeordnet ist.

11. Gegenstrom-Plattenwärmeübertrager nach einem der vorherigen Ansprüche, gekennzeichnet durch die Verwendung als Wärmetauscher in einer Vorrichtung zur Kälterückgewinnung aus adiabat gekühlter Abluft nach DE 195 08 183 A1.
